# EUROPEAN PATENT APPLICATION

(11) **EP 4 053 943 A1**
(43) Date of publication of application: **07.09.2022**
(21) Application number: 21382186.1
(22) Date of filing: 05.03.2021
(51) Int. Cl.: H01M 4/1391, C01G 45/12, H01M 4/505, H01M 4/62, H01M 10/054, H01M 10/0568

(54) **ELECTRODE FOR CALCIUM BATTERIES AND ITS MANUFACTURING METHOD**

(71) Applicant: Consejo Superior de Investigaciones Cientificas, 28006 Madrid (ES); Universidad Complutense De Madrid, 28040 Madrid (ES)
(72) Inventor: BLACK SERRA, Ashley Philip, 08193 Cerdanyola del Vallès (Barcelona) (ES); PALACIN PEIRO, M. Rosa, 08193 Cerdanyola del Vallès (Barcelona) (ES); ARROYO DOMPABLO, María Elena, 28040 Madrid (ES)
(74) Representative: Pons

(57) **Abstract**

The invention relates to a positive electrode that includes the calcium and manganese oxide of formula Ca₂MnO_{3.5} as positive-electrode active material and its manufacturing method. The invention also relates to a calcium-based secondary cell comprising said electrode and to a calcium-based secondary battery comprising such a calcium-based secondary cell.

## Description

The invention relates to a positive electrode that includes a positive-electrode active material and its manufacturing method, said positive-electrode active material being capable of accepting and releasing calcium ions. The invention also relates to a calcium-based secondary cell comprising said electrode and to a non-aqueous calcium-based secondary battery comprising such a calcium-based secondary cell.

### BACKGROUND ART

Secondary (i.e. rechargeable) electrochemical cells and batteries are a power source widely used in information-related devices, communication devices (such as personal computers, camcorders and cellular phones) as well as in the automobile industry or in stationary power storage devices. Conventional lithium-based cells typically include a positive electrode (also referred to as "cathode") and a negative electrode (also referred to as "anode") whose active materials are capable of accepting and releasing lithium ions, as well as an electrolyte arranged between the electrodes and including lithium ions.

Calcium is much more abundant in nature than lithium and, despite the high atomic weight of Ca with respect to Li, the bivalent nature of Ca means that it could in principle act as a suitable material for rechargeable batteries exhibiting high energy density, even if it has proven difficult so far to identify suitable positive electrode materials and Ca batteries are very underdeveloped as compared to their Li counterparts.

Thus, unfortunately, to date, the number of materials that have been shown to electrochemically react with calcium in a reversible manner is very limited and they operate at rather low potential, which limits the energy density achievable for the battery.

In prior art, the next documents: "Pathreeker, S., et al. Journal of Electroanalytical Chemistry, 2020, 874,114453", " Liu, M. et al. Energy Environ. Sci., 2015, 8, 964-974" and "Arroyo-de Dompablo M. E. et al. Phys. Chem. Chem. Phys., 2016,18, 19966-19972" disclose a refer to a computational evaluation of the calcium ion mobility and CaMn₂O₄ polymorphs and CaMnO₃ with perovskite-type structure to elucidate whether they could be potentially considered as positive electrode materials for calcium batteries. The calculated energy barriers showed that Ca diffusion is very much dependent on the crystal structure and too high, except for hypothetical compound with formula CaMn₂O₄, a spinel-type crystal structure which is not stable enough to be synthesized.

The document "Torres A. et al. Energy Storage Materials 2019, 21, 354-360" also discloses computational work to estimate barriers for calcium migration in several oxides. Ca₂Mn₂O₅ and CaMn₄O₈ are found to exhibit too high energy barriers for migration of calcium ions.

The document WO2019096446A1 discloses oxides such as Ca₃Mn₂O₆, for positive electrodes of calcium-based secondary cell. This electrode has a low theoretical electrochemical capacity.

In view of the above, the present invention proposes a different Ca-Mn-O material to those known in the state of the art for use in electrodes of calcium batteries. The material used in the present invention presents several advantages as explained below in the description of the invention.

### SUMMARY OF THE INVENTION

The present invention discloses a new use of the oxide Ca₂MnO_{3.5} as an active material of a positive electrode in a calcium-based secondary battery.

Then, a first aspect of the present invention relates to an electrode for calcium-based secondary battery characterized in that the active electrode material is the calcium and manganese oxide of formula Ca₂MnO_{3.5}.

The active electrode material is the material that is oxidized or reduced when used in a battery (on charge or discharge).

In preferred embodiment, the electrode is a positive electrode.

The term "positive electrode" is intended to refer to the electrode undergoing oxidation on charge and reduction on discharge of the battery. The positive electrode acts as the cathode on discharge and the anode on charge.

Preferably, the electrode comprises additional components as electrically conductive additives and/or polymers.

The electrically conductive additives are selected preferably from the list comprising: carbon, metals or ceramics. Preferably, these electrically conductive additives have an average particle size between 2 and 50 nm. The term "ceramics" as used in this disclosure refers to substantially inorganic nonmetallic material. For example: Al₂O₃, SiO₂, ZrO₂, MgO, and CeO₂ Particulate carbon may be selected within one or more of carbon blacks such as ketjen black, acetylene black, channel black, furnace black, lamp black, and thermal black; graphite, such as natural graphite, e.g., scaly graphite, artificial graphite, and expanded graphite; activated carbon from charcoal and coal; carbon fibers obtained by carbonizing synthetic fibers and petroleum pitch-based materials; carbon nanofibers; tubular carbon, such as carbon nanotubes; and graphene. Nanometals/nanoceramics may include Ni or other metals, Al₂O₃, SiO₂, ZrO₂, MgO, and/or CeO₂ and may have an average particle size equal to or lower than about 15 nm (between 1 and 15 nm).

The polymers are selected preferably from the list comprising: polyethylene, polypropylene, polytetrafluoroethylene (PTFE), polyvinylidene fluoride (PVDF), styrene-butadiene rubber (SBR), carboxymethylcellulose (CMC), tetrafluoroethylenehexafluoropropylene copolymers, tetrafluoroethylenehexafluoropropylene copolymers (FEP), tetrafluoroethylene-perfluoroalkyl vinyl ether copolymers (PFA), vinylidene fluoride-hexafluoropropylene copolymers, vinylidene, fluoride-chlorotrifluoroethylene copolymers, ethylenetetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers, and combinations thereof may be preferred. The polymer acts as a binder.

In a preferred embodiment, the electrode comprises Ca₂MnO_{3.5}, an electrically conductive additive and a polymer. In a more preferred embodiment, the electrode contains Ca₂MnO_{3.5}, conductive additive and a polymer in a weight ratio of 96-60/2-20/2-20, more preferably 80/10/10.

Ca₂MnO_{3.5} has an orthorhombic crystal structure (*Bbcm,* a = 5.30 Å, b = 10.05 Å, and c = 12.23 Å) and is an oxygen-deficient compound. Its crystal structure can be described as square pyramidal polyhedra of MnO₄ linked by corners in the *ab* plane, forming rings of six MnO₄ units. Along the *c*-axis, in between two sheets of [MnO₄], there are two consecutive layers of calcium atoms which form an 8-fold coordination polyhedron ("Structure determination of Ca2MnO4 and Ca2MnO3.5 by X-ray and neutron methods", J. Sol. State Chem. 1985, 59, 71). The calculated barriers of 1.1 and 1.3 eV in two different crystallographic directions (as calculated in example 1) suggest that two-dimensional conductivity may occur in this compound.

A second aspect of the present invention refers to a method of manufacturing the electrode described in the first aspect of the present invention, comprising the following steps:
- preparation of the oxide Ca₂MnO_{3.5} by reducing Ca₂MnO₄,
- deposition of the prepared oxide Ca₂MnO_{3.5} on an electrically conducting substrate.

In a preferred embodiment, the method comprises, previously to the deposition step an additional step of mixing Ca₂MnO_{3.5} with a conductive additive and/or a polymer (polymeric binder). To prepare de mixture, a solvent may also be used such as water or N-Methyl-2-pyrrolidone (NMP), forming a slurry. After deposition, a drying step. The drying step can be carried out a temperature between 15 and 200ºC or under vacuum.

The conductive additive and the polymer are selected preferably as defined in the first aspect of the invention. In a preferred embodiment the prepared mix contains Ca₂MnO_{3.5}, conductive additive and polymeric binder in a weight ratio of 96-60/2-20/2-20, more preferably in a weight ratio of 80/10/10.

Ca₂MnO₄ precursor was achieved by the Pechini method (US3330679). It consists of mixing aqueous solutions of calcium and manganese salts (typically nitrates) in stoichiometric amounts to achieve the final product, adding citric acid to the mixture and then heating to dryness to achieve a powder which is then further treated at 1000°C for 24h to form Ca₂MnO₄.

The electrodes can be produced by coating a conducting substrate that acts as a current collector with the Ca₂MnO_{3.5} or with the mixture of Ca₂MnO_{3.5} and a conductive additive and/or a polymer. Generally, the mixture is in the form of a slurry since the mixture is prepared using a solvent as indicated above.

The electrically conducting substrate is selected preferably from carbon, stainless steel or aluminium foils. More preferably, the conductive substrate is aluminium foil. Preferably, the thickness of the conducting substrate is between 5 and 30 micrometers.

In a preferred embodiment, the reduction of Ca₂MnO₄ is carried out in the presence of NH₃, more preferably in presence of a flow of NH₃ between 50 and 1200 ml/min, and even more preferably, a flow of NH₃ of 1200ml/min.

In another embodiment, the reduction step a) is carried out at a temperature between 390 and 550°C, more preferably at 420 ºC.

In another embodiment, the reduction step a) is carried out during a time in the range 4h to 50h, more preferably, 4 h.

In another embodiment, the reduction of Ca₂MnO₄ is carried out in the presence of a NH₃ flow between 50 and 1200 ml/min, at a temperature between 390 and 550°C and time in the range 4h to 50h and, more preferably, in presence of a flow of NH₃ of 1200ml/min, at 420 ºC and for 4 h.

A third aspect of the present invention refers to a calcium-based secondary cell comprising:
- a negative electrode (also called "counter electrode") that includes a negative-electrode active material,
- a positive electrode as defined in the first aspect of the present invention,
- an electrolyte arranged between the negative electrode and the positive electrode, said electrolyte comprising a calcium salt.

The term "negative electrode" is intended to refer to the electrode undergoing oxidation on discharge and reduction on charge of the battery. The counter electrode acts as the anode on discharge and the cathode on charge.

The electrolyte is an electrolyte compatible with the electrodes, that is, the electrolyte has high conductivity of Ca²⁺ ions, is an electronic insulator and has high electrochemical stability. In a preferred embodiment, this electrolyte comprises a calcium salt dissolved in an organic solvent or in an ionic liquid.

In a preferred embodiment, the electrolyte is a solution of calcium tetrafluoroborate (Ca(BF₄)₂), calcium perchlorate (Ca(ClO₄)₂) calcium hexafluorophosphate (Ca(PF₆)₂), calcium tetrafluorosulfonylimide (Ca(TFSI)₂) or (Ca(N(SO₂CF₃)₂)₂), calcium triflate Ca(Tf)₂, calcium trifluoromethanesulfonate (Ca(CF₃SO₃)₂) or mixtures thereof in an organic solvent. More preferably, the electrolyte is a solution of calcium tetrafluoroborate (Ca(BF₄)₂).

In a preferred embodiment, said organic solvent may be selected from the group comprising: propylene carbonate (PC), ethylene carbonate (EC), butylene carbonate (BC), vinylene carbonate (VC), fluoroethylenecarbonate (FEC), dimethyl carbonate (DMC), diethylcarbonate (DEC), ethyl methyl carbonate (EMC), N,N-dimethylformamide (DMF), fluoroethylene carbonate (FEC), γ-buryrolactone, γ-valerolactone, tetrahydrofuran (THF), 2-methyltetrahydrofuran, dimethoxyethane (DME), ethylene glycol dimethyl ether, triethylene glycol dimethyl ether (TEDGE), tetraethyleneglycol dimethyl ether (TEDGE), and combinations thereof may be preferred. More preferably, the solvent is a mixture of ethylene carbonate (EC) and propylene carbonate (PC), and even mor preferably in a proportion 1:1 v/v.,
In a preferred embodiment, the negative electrode comprises graphite, carbon, meso-carbon microbead (MCMB), activated carbon, metallic calcium or a calcium alloy CaxMy where M= Sb, Ge, Al, Pb, Cu, Cd, Ge, Ga, Bi, In, Tl, Hg, Ag, Au, Pt, and Pd, Sn or Si; "x" is a value between 5 and 0.2 and "y" is a value between 5 and 0.2.

The invention further relates to a calcium-based secondary battery comprising an electrode as defined in the first aspect of the present invention or a calcium-based secondary cell as described in the second aspect of the present invention.

During battery charging, the following reaction takes place in the positive electrode: Ca₂MnO_{3.5} → Ca₂₋ₓMnO_{3.5} + x Ca²⁺ + 2x e⁻
During discharge the reverse reaction takes place.

Other aspect of the invention refers to the use of the oxide Ca₂MnO_{3.5} as an active electrode material, more particularly, as an active positive electrode material.

In a preferred embodiment, this aspect refers to the use of the oxide Ca₂MnO_{3.5} as the active electrode material of a calcium-based secondary battery and more preferably as active positive electrode material of a calcium-based secondary battery.

A last aspect of the present invention relates to the use of an electrode as defined in the first aspect of the present invention as part of a calcium-based secondary battery or for manufacturing a calcium-based secondary battery.

The oxide Ca₂MnO_{3.5} presents the next advantages to be used as an active material of an electrode:
- it contains calcium in its composition, which makes it possible to use negative electrodes that do not contain calcium,
- it is based on elements that are abundant in the earth's crust and have low cost and toxicity,
- it has a high redox potential, which will increase the energy density of the batteries,
- it has a predicted band-gap below 1.5 eV, which will allow for a fair electronic conductivity when mixed with additives,
- the predicted low cell volume variation upon Ca deinterclation (below 3%) decreases the risk of crystal cracking upon cycling.

The potential viability of Ca₂MnO_{3.5} as an electrode material was evaluated by DFT (***D**ensity **f**unctional **t**heory*) calculations that allowed estimating the approximate operating potential as well as the energy barriers for the migration of calcium ions in the crystalline structure, which were found to be approximately 3.2 V (for the Mn³⁺/Mn⁴⁺ redox couple) and 1.1 eV.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings are provided by way of illustration and are not intended to be limiting of the present invention.

### BRIEF DESCRIPTION OF THE DRAWINGS

**Figure 1****.** Selected X-ray diffraction patterns of some Ca₂MnO_{3.5} synthesis attempts during synthesis route optimization.
**Figure 2****.** X-ray powder diffraction patterns of pristine and electrochemically oxidized Ca₂MnO_{3.5} samples.
**Figure 3****. (A)** Characteristic voltage profiles versus specific capacity expressed as mole of virtually de-inserted Ca²⁺. The corresponding ex-situ X-ray diffraction (XRD) patterns at the end of oxidation and reduction together with the pristine sample are displayed in **(B)** and **(C).**
**Figure 4****.** Rietveld fit of laboratory X-ray powder diffraction pattern for a electrochemically oxidized sample of Ca₂₋ₓMnO_{3.5} up to equivalent x=1.5 in Ca(BF₄)₂ in EC:PC electrolyte at room temperature and at a Crate of C/50. Upper ticks correspond to calculated reflections for remaining Ca₂MnO_{3.5} and lower ticks to calculated reflections for oxidized phase in tetragonal space group *l41*/*acd.*
**Figure 5****.** Calculated average voltage profile for the oxidation of the Ca₂MnO_{3.5} cathode to Ca_{1.5}MnO_{3.5} upon battery charge, and predicted cell parameters and volume variation.
**Figure 6****. (A)** Crystal structure of Ca₂MnO_{3.5}: Mn in polyhedral representation, O omitted and Ca ions as balls. The calculated energy barriers (in eV) are displayed in **(B)** for in-plane pathways and in **(C)** for inter-plane pathways. **(D)** Calculated energy landscape for the investigated pathways.

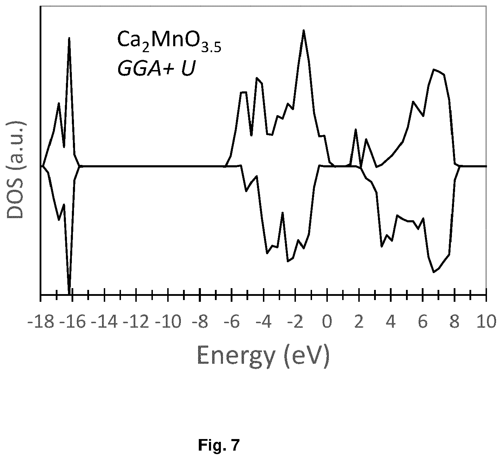

**Figure 7****.** Calculated Density of States for Ca₂MnO_{3.5} within the GGA+U approximation. The Fermi level is set as the zero of energy.

### EXAMPLES

The invention shall be illustrated below by means of assays performed by the inventors that reveal the effectiveness of the product of the invention.

### Example 1. Computational investigation

The calculations have been performed using the ab-initio total-energy and molecular dynamics program VASP (Vienna Ab-initio Simulation Program) developed at the Universitat Wien. Total energy calculations based on Density Functional Theory (DFT) were performed within the Generalized Gradient Approximation (GGA), with the exchange and correlation functional form developed by Perdew, Burke, and Ernzerhof (PBE). The interaction of core electrons with the nuclei is described by the Projector Augmented Wave (PAW) method. The energy cut off for the plane wave basis set was kept fix at a constant value of 600 eV throughout the calculations. The integration in the Brillouin zone is done on an appropriate set of k-points determined by the Monkhorst-Pack scheme. A convergence of the total energy close to 10 meV per formula unit is achieved with such parameters. All crystal structures were fully relaxed (atomic positions, cell parameters and volume). The final energies of the optimized geometries were recalculated so as to correct the changes in the basis set of wave functions during relaxation. To take electron correlation into account, the total energies of the GGA-optimized compounds have been calculated using the GGA+U method, with *U*_{eff} of 4 eV for the *d*- states of Mn.

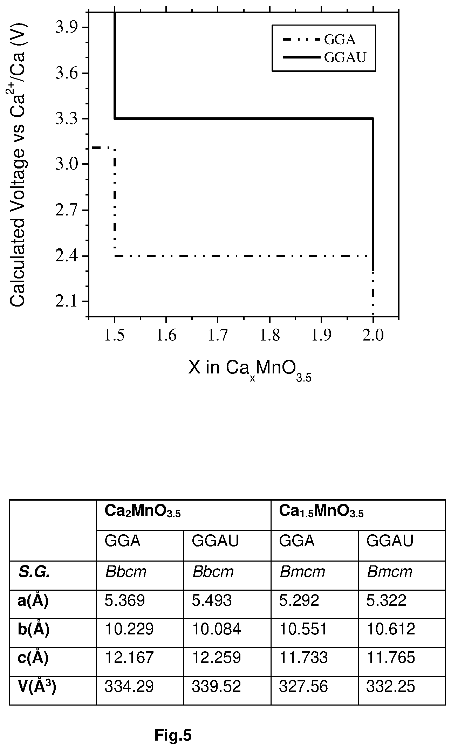

Ca deinsertion from Ca₂MnO_{3.5} is considered up to the limit composition Ca_{1.5}MnO_{3.5} (Mn³⁺/Mn⁴⁺ redox couple). To simulate the Ca_{1.5}MnO_{3.5} phase, seven different vacancies/ Ca arrangements within the unit cell have been considered. **Figure 5** includes the calculated average voltage taking the most stable configuration out of this set; 2.4 (GGA) and a most reliable value of 3.3 (GGA+U) . Calcium deintercalation implies a moderate volume contraction of about 2% (GGA and GGA+U).

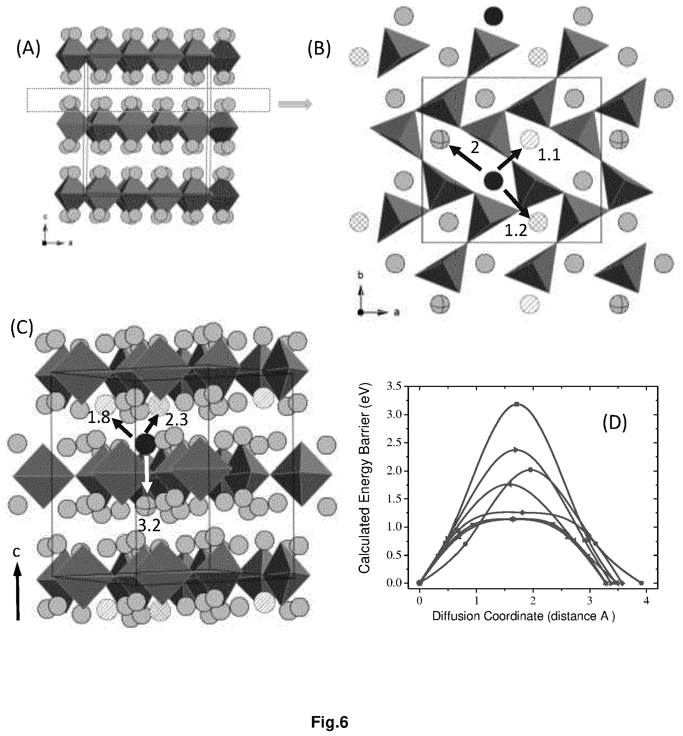

Ca²⁺ mobility in Ca₂MnO_{3.5} is investigated using a 2x1x1 supercell where one Ca site is removed creating a vacancy (Ca₃₁Mn₁₆O₅₆ composition). DFT calculations are performed using the Nudged Elastic Band method (NEB) as implemented in VASP. Constant volume calculations were performed for three intermediate images. To calculate the energy at the saddle point, cubic splines were fit through the images along each hop. **Figure 6A** shows the crystal structure of Ca₂MnO_{3.5}. Ca diffusion in the *ab* plane involve the possible pathways depicted by arrows in **figure 6A**. The calculated barriers of 1.1 and 1.2 eV in two different directions suggest that two-dimensional conductivity may occur in the material. The diffusion pathways along the c-axis been two consecutive Ca layers have energy barriers of 1.8 and 2.3 eV **(****Figure 6C****).** Ca diffusion passing through the Mn-O plane is impeded by a large energy migration barrier of 3.2 eV.

### Example 2: Preparation of the electrode containing the oxide Ca₂MnO_{3.5}

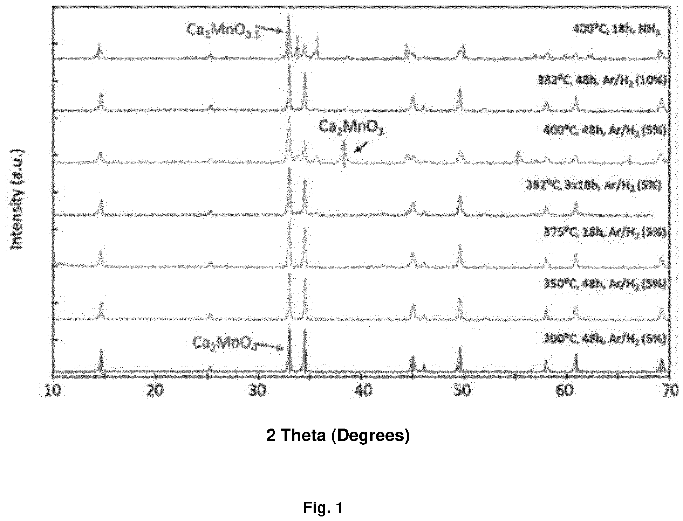

The synthesis of Ca₂MnO_{3.5} by low temperature reduction of the Ruddlesden-Popper (n=1) Ca₂MnO₄ compound was reported by Poeppelmeier *et al.* (K. R. Poeppelmeier et al., "CaMnO2.5 and Ca2MnO3.5: new oxygen-defect perovskite-type oxides", J. Sol. State Chem. 1982, 44, 89; M. E. Leonowicz et al., "Structure determination of Ca2MnO4 and Ca2MnO3.5 by X-ray and neutron methods", J. Sol. State Chem. 1985, 59, 71) and found to require careful control of both the temperature and an appropriate reduction agent, as Ca₂MnO_{3.5} was found to be metastable and could only be achieved in a very narrow range of temperatures. Ca₂MnO₄ precursor was achieved by the Pechini method(US3330679), starting from an aqueous solution containing the appropriate molar amounts of calcium and manganese cations obtained by dissolving Mn(NO₃)2·9H₂O and Ca(NO₃)₂·4H₂O followed by the addition of citric acid (C₆H₈O₇) and Ethylene glycol (C₂H₆O₂) in a molar ratio Ca:Mn:C₆H₈O₇:C₂H₆O₂=2:1:1:1. This solution is stirred under heating at 55-80°C. and evaporated to dryness after 12h. The solid residue achieved is then heated 500°C in air for 6h and finally annealed at 1000°C for 24h to achieve Ca₂MnO₄.
Its reduction was studied at temperatures ranging between 300°C and 430°C with a variety of reducing atmospheres (H₂/Ar 5%, 10% and NH₃) and different flows, during different periods of time. In 5% H₂/Ar atmosphere no evidence of the reduced Ca₂MnO_{3.5} phase could be observed after treatments at temperatures between 300°C and 350°C even after several treatments of 48h. At temperatures of 382°C the characteristic reflections of the reduced phase started to appear. However, the amount of reduced phase did not improve after consecutive regrinding and thermal treatment steps. Short treatment of the starting material Ca₂MnO₄ at 400°C in 5% H₂/Ar led to the formation of a larger quantity of Ca₂MnO_{3.5} together with a large amount of the over reduced Mn²⁺ containing rock salt Ca₂MnO₃ phase. Equivalent studies were performed with 10% H₂/Ar leading to similar results. At this point, the use of a less reducing atmosphere was deemed necessary. Synthesis attempts using NH₃ as reducing agent did indeed yield Ca₂MnO_{3.5}. Optimization of the protocol was required to minimize the amount of impurities (either Ca₂MnO₄ precursor and/or over reduced rock salt phase, both confirmed to be electrochemically inactive). Within the range of conditions systematically explored (see **Figure 1**) (temperature between 390 and 550°C, NH₃ flow between 50 and 1200 ml/min and time in the range 4h to 50), the best Ca₂MnO_{3.5} batches obtained contain less than 5% impurities (as deduced from Rietveld refinement) and were prepared by a short treatment (4h) under high ammonia flux (1200 ml/min) at 420°C. These were selected for electrochemical characterization.

The electrodes are produced by coating slurry on a metal foil that acts as a current collector. The slurry is prepared by mixing active material, a conductive additive such as carbon black and a polymeric binder such as PVFD in a weight ratio of 80/10/10. To achieve the right viscosity, N-Methyl-2-pyrrolidone (NMP) is added as long as the slurry exhibits a flow. Mixing is done by means of ball milling in an agate container with 3 agate balls of 1 cm diameter at 500 rpm for 2 h with change of the rotating way every 30 min using a PM100 Retsch planetary Ball Miller. The slurries are tape cast on a 20 µm thick aluminum foil (Goodfellow) with a 400 µm Doctor-Blade and dried at 120°C under vacuum for 2 h. Once dried, 1 cm² disk electrodes are cut and pressed at 5 tons.

### Example 3. Electrochemical studies

A three electrode Swagelok cell was used for the electrochemical test. Ca metal (AlfaAesar, 99.5%) or AC (Kynol, ACC-509220) were used as counter electrodes (CE). Either Ca metal or an Ag wire were used as reference electrodes (RE). The electrolytes used were 0.3 M Ca(BF₄)₂ dissolved in a 1:1 mixture (v/v) of ethylene carbonate (EC, Aldrich anhydrous 99.0%) and propylene carbonate (PC, Aldrich anhydrous 99.0%), prepared from Ca(BF₄)₂ x H₂O salt (Alfa Aesar) or in LiPF₆ in ethylene carbonate: dimethyl carbonate [DMC] [1:1 v/v] (LP30, Aldrich). Aluminum current collector was used for the positive electrode, stainless steel for the counter and reference electrodes. Two sheets of Whatman^{®} Grade GF/D borosilicate glass fiber were used as separators. Electrolyte preparation and cell assembling were done in Ar filled glove box with less than 1 ppm of O₂ and H₂O. Said electrode (typical loading ca. 2 mg/cm² of active material) was used galvanostatic cycling with potential limit (GCPL) test at a C/50 rate at room temperature or at 100°C.

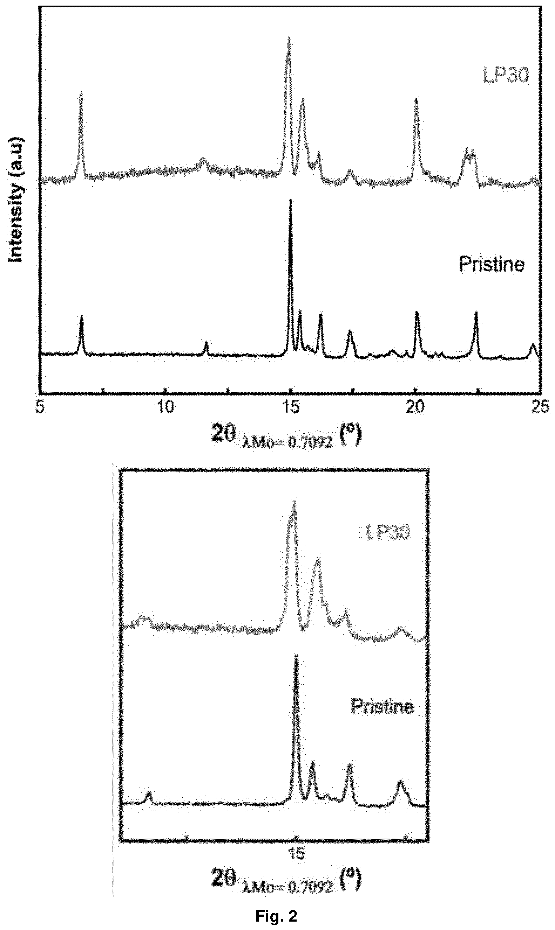

Electrodes were recovered after oxidation (calcium extraction) and powder sealed inside a capillary to perform X-ray diffraction Significant changes in the diffraction pattern are observed after the experiments conducted in 1M LiPF₆ in EC:DMC (ethylene carbonate: dimethyl carbonate [DMC] [1:1 v/v]) electrolyte, which seem to point at the feasibility of calcium de-intercalation from this material (see **Figure 2****).**

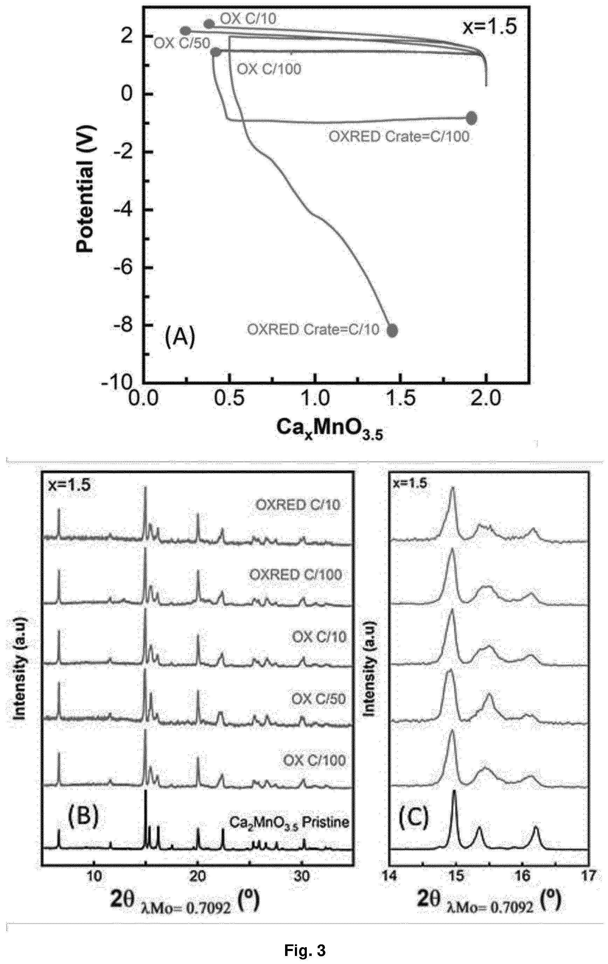

Further electrochemical tests were carried out in Ca cell with Ca(BF₄)₂, EC/PC electrolyte and activated carbon cloth as counter electrode at room temperature. **Figure 3A** Shows the first oxidation and first cycle of Ca₂MnO_{3.5} electrodes at several currents (C being equivalent to deintercalacion of one mole of calcium ions in one hour). Upon oxidation, as the intensity increases a slight increase of polarization is observed on the plateaus that are centered between 1.4 - 2.2 V *vs.* Ag⁺/Ag, while upon reduction, a strong polarization takes place as the intensity increases. The changes observed in the corresponding ex-situ XRD pattern of the oxidized sample **(****Figure 3B****)** are consistent with the formation of a secondary phase similar to the one observed in Li cells. At a given intensity, the proportion of the secondary phase increases with the capacity (XRD not shown here) and at the same level of charge a different proportion of secondary phase is observed for each intensity value. Upon oxidation the maximum phase evolution is observed at C/50. Considering Mn⁺⁴ as the highest achievable oxidation state of manganese in the studied conditions, the full transformation to the secondary phase should be achieved for Ca_{1.5}MnO_{3.5}. yet at virtually de-interlaced calcium values of 1.5 mol small fraction of pristine Ca₂MnO_{3.5} is still present. Therefore, contributions to the observed values of capacity from electrolyte decomposition side reactions must be taken into account. Upon reduction the degree of reversibility was found to be dependent to the intensity value. Despite the strong polarization the highest degree of reversibility was achieved at C/10. Low intensity values favor kinetically controlled reactions but also increases substantially the amount of parasitic reactions. Therefore, at C/100 the major contribution to the observed capacity comes presumably from side reactions wile at C/10 manganese reduction process is the major contributor to the observed capacity. Although the overall reversible calcium insertion and de-insertion in Ca₂₋ₓMnO_{3.5} appears to be achievable, at least to a certain extent, the kinetic of these two processes differ substantially between each other. Structural characterization of the oxidized secondary phase and precise quantification of calcium in oxidized Ca₂₋ₓMnO_{3.5} can be attempt by Rietveld refinement.

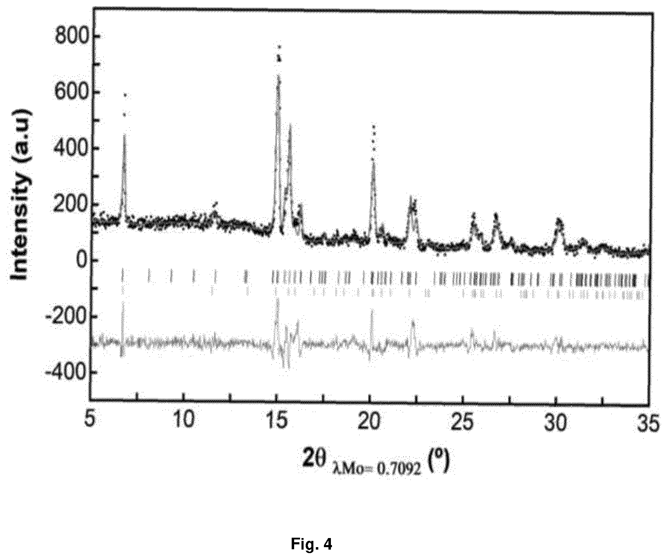

The observed and calculated laboratory X-ray diffraction patterns obtained by Rietveld refinement for the electrochemically oxidized sample are shown in **Figure 4****.** The corresponding electrochemical measurement was performed in a Ca(BF₄)₂ in EC:PC electrolyte at room temperature and at C/50. The refinements indicate the presence of two phase in the oxidized sample. The first phase corresponds to the remaining unoxidized Ca₂MnO_{3.5} phase that was fit with the *Bbcm* space group. The refined lattice parameters for this phase were a= 5.2961(9), b= 10.0966(16) and c= 12.2133(20). Additional peaks observed upon electrochemical oxidation of Ca₂MnO_{3.5} are consistent with the formation of a tetragonal phase with space group *l41*/*acd* and lattice parameters a= 5.2377(6) and c= 24.3541(48). The refined phase weight fractions resulted in a 71% of the oxidized phase. Due to low signal to noise ratio and low peak resolution precise quantification of calcium in oxidized Ca₂₋ₓMnO_{3.5} cannot be inferred from these data.

## Claims

1. Electrode, for calcium-based secondary battery **characterized in that** the active electrode material is the calcium and manganese oxide of formula Ca₂MnO_{3.5}.

2. Electrode, according to claim 1, wherein the electrode comprises electrically conductive additives selected from the list comprising: carbon, metals or ceramics.

3. Electrode, according to claim 1 or 2, wherein the electrode comprises a polymer selected from the list comprising: polyethylene, polypropylene, polytetrafluoroethylene (PTFE), polyvinylidene fluoride (PVDF), styrene-butadiene rubber (SBR), carboxymethylcellulose (CMC), tetrafluoroethylenehexafluoropropylene copolymers, tetrafluoroethylenehexafluoropropylene copolymers (FEP), tetrafluoroethylene-perfluoroalkyl vinyl ether copolymers (PFA), vinylidene fluoride-hexafluoropropylene copolymers, vinylidene, fluoride-chlorotrifluoroethylene copolymers, ethylenetetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers and mixtures thereof.

4. Electrode, according to any of claims 1 to 3, wherein it is a positive electrode.

5. Method of manufacturing the electrode according to any of the preceding claims, comprising the following steps:
- preparation of the oxide Ca₂MnO_{3.5} by reducing Ca₂MnO₄, and
- deposition of the prepared oxide Ca₂MnO_{3.5} on an electrically conducting substrate.

6. Method, according to claim 5, wherein the reduction of Ca₂MnO₄ is carry out in the presence of a NH₃ flow between 50 and 1200 ml/min.

7. Method, according to any of claims 5 to 6, wherein the reduction of Ca₂MnO₄ is carry out at a temperature between 390 and 550°C.

8. Method, according to any of claims 5 to 7, wherein the reduction of Ca₂MnO₄ is carry out in during a time in the range 4h to 50h.

9. A calcium-based secondary cell comprising:
- a negative electrode,
- a positive electrode as defined in any of claims 1 to 4 and
- an electrolyte arranged between the negative electrode and the positive electrode, said electrolyte comprising a calcium salt.

10. Calcium-based secondary cell according to claim 9 wherein the negative electrode comprises graphite, carbon, meso-carbon microbead (MCMB), activated carbon, metallic calcium or a calcium alloy.

11. Calcium-based secondary cell according to any of claims 8 to 10 wherein the electrolyte is a solution of calcium tetrafluoroborate (Ca(BF₄)₂), calcium perchlorate (Ca(ClO₄)₂) calcium hexafluorophosphate (Ca(PF₆)₂), calcium tetrafluorosulfonylimide (Ca(TFSI)₂) or (Ca(N(SO₂CF₃)₂)₂), calcium triflate Ca(Tf)₂, calcium trifluoromethanesulfonate (Ca(CF₃SO₃)₂) or mixtures thereof in an organic solvent..

12. Calcium-based secondary battery comprising an electrode as defined in claims 1-4 or a calcium-based secondary cell as described in claims 9-11.

13. Use of the oxide Ca₂MnO_{3.5} as an active electrode material.

14. Use of the oxide Ca₂MnO_{3.5}, according to claim 13, as an active positive electrode material of a calcium-based secondary battery.

15. Use of the electrode of any of claims 1 to 4 as part of a calcium-based secondary battery.
